# EUROPEAN PATENT APPLICATION

(11) **EP 4 398 352 A2**
(43) Date of publication of application: **10.07.2024**
(21) Application number: 24150020.6
(22) Date of filing: 02.01.2024
(51) Int. Cl.: H01M 8/04223, H01M 16/00

(54) **SYSTEMS AND METHODS FOR OPERATING A FUEL CELL**

(30) Priority: 30.12.2022 US 202263477974 P
(71) Applicant: Plug Power, Inc., Latham, NY 12110 (US)
(72) Inventor: ROSEN, Jonathan, Latham, 12110 (US); FARESE, Andrew, Latham, 12110 (US); HELLER, Christian, Latham, 12110 (US); SPRAGUE, Brian, Latham, 12110 (US)
(74) Representative: Buzzi, Franco

(57) **Abstract**

A method for operating of a fuel cell includes flowing oxidant and fuel to a cathode and an anode of a fuel cell to provide a flow of electrical current from the fuel cell to a battery. The fuel cell is disconnected from the battery and a flow of the oxidant to the cathode is stopped. Current passes from the fuel cell through a resistor coupled to the fuel cell, and a voltage of the fuel cell decreases to clean off the catalyst surface of a membrane of a membrane electrode assembly of the fuel cell. The flow of oxidant to the cathode is increased and the battery is reconnected to the fuel cell to provide electrical current to the battery.

## Description

### Cross-Reference to Related Application

The present application claims the benefit of and priority, under 35 U.S.C. 119(e), to U.S. Provisional Application Serial No. 63/477,974 filed on December 30, 2022, entitled "Method for Operating a Fuel Cell".

### Technical Field

This invention relates in general to systems and methods for operating a fuel cell system and more particularly to systems and methods for reducing contaminants in a proton exchange membrane of a fuel cell system.

### Background of the Invention

Fuel cells electrochemically convert fuels and oxidants to electricity and heat and can be categorized according to the type of electrolyte (e.g., solid oxide, molten carbonate, alkaline, phosphoric acid or solid polymer) used to accommodate ion transfer during operation. Moreover, fuel cell assemblies can be employed in many (e.g., automotive to aerospace to industrial to residential) environments, for multiple applications.

A Proton Exchange Membrane (hereinafter "PEM") fuel cell converts the chemical energy of fuels such as hydrogen and oxidants such as air directly into electrical energy. The PEM is a sold polymer electrolyte that permits the passage of protons (i.e., H+ ions) from the "anode" side of the fuel cell to the "cathode" side of the fuel cell while preventing passage therethrough of reactant fluids (e.g., hydrogen and air gases). The Membrane Electrode Assembly (hereinafter "MEA") is placed between two electrically conductive plates, each of which has a flow channel/passage to direct the fuel to the anode side and oxidant to the cathode side of the PEM.

Two or more fuel cells can be connected together to increase the overall power output of the assembly. Generally, the cells are connected in series, wherein one side of a plate serves as an anode plate for one cell and the other side of the plate is the cathode plate for the adjacent cell. These are commonly referred to as bipolar plates. Alternately, the anode plate of one cell is electrically connected to the separate cathode plate of an adjacent cell. Commonly these two plates are connected back to back and are often bonded together (e.g., bonded by adhesive, weld, or polymer). This bonded pair becomes as one, also commonly called a bipolar plate, since anode and cathode plates represent the positive and negative poles, electrically. Such a series of connected multiple fuel cells is referred to as a fuel cell stack. The stack typically includes means for directing the fuel and the oxidant to the anode and cathode flow field channels, respectively. The stack usually includes a means for directing a coolant fluid to interior channels within the stack to absorb heat generated by the exothermic reaction of hydrogen and oxygen within the fuel cells. The stack generally includes means for exhausting the excess fuel and oxidant gases, as well as product water.

The stack also includes an endplate, insulators, membrane electrode assemblies, gaskets, separator plates, electrical connectors and collector plates, among other components, that are integrated together to form the working stack designed to produce electricity. The different plates may be abutted against each other and connected to each other to facilitate the performance of particular functions.

Fuel cells during operation can be contaminated from several sources. Two of the primary sources of contaminants are the air, which can contain VOCs, sulfur compounds, NOₓ, metals, and anions internal to the fuel cell construction itself. Another contaminant is carbon monoxide. The contaminants may contain impurities that inhibit the desired electrochemical reaction of the fuel cell. These impurities can form deposits on the surface of a catalyst later, blocking the active catalysts sites and preventing portions of the catalyst layer from inducing a desired electrochemical fuel oxidation or oxidant reduction reaction. These deposits thus result in reduced voltage output of the fuel cell.

Thus, there is a need for improved fuel cell systems and improved methods of operating fuel cells that minimize contamination of the fuel cells during operation and are more robust to operation in non-ideal environments.

### Summary of the Invention

The present invention provides, in a first aspect, a method for operating of a fuel cell, including flowing oxidant and fuel to a cathode and an anode of a fuel cell to provide a flow of electrical current from the fuel cell to a battery, disconnecting the fuel cell from the battery, stopping a flow of the oxidant to the cathode, passing current from the fuel cell through a resistor coupled to the fuel cell, and allowing a voltage of the fuel cell to decrease to clean off the catalyst surface of a membrane of a membrane electrode assembly of the fuel cell by allowing a buildup of contaminants to be expelled through wastewater produced from the fuel cell. After the contaminants have been expelled, the method further includes increasing the flow of oxidant to the cathode and reconnecting the battery to the fuel cell to provide electrical current to the battery again.

The present invention provides, in a second aspect, a fuel cell system, including a fuel cell having a membrane electrode assembly with a membrane having a catalyst surface, an oxidant source supplying a flow of oxidants to the fuel cell, a battery electrically connected to the fuel cell; and a controller. The controller is configured to stop the flow of oxidants to the fuel cell, disconnect the battery from the fuel cell, and connect a resistor to the fuel cell such that current passes from the fuel cell through the resistor to allow a voltage of the fuel cell to go below a predetermined voltage to clean off the catalyst surface of the membrane of the membrane electrode assembly of the fuel cell.

### Brief Description of the Drawings

FIG. 1 is an exploded assembly view of a portion of a single fuel cell of a fuel cell system;
FIG. 2 is a block diagram of a fuel cell system in accordance with the invention;
FIG. 3 shows two graphs, the graph on the left showing that a high load profile of a fuel cell system tends to result in a lower battery state of charge, with the graph on the right showing that a low load profile tends to result in a higher battery state of charge;
IG. 4 is a table that shows the power and operation time differences between the two different fuel cell systems demonstrated in the graphs of FIG. 3;
FIG. 5 shows two graphs that shows the current versus the voltage of the two different load profiles described in FIG. 4, showing the effect of voltage cycles on system polarization curves between high load (left) and light load (right) applications;
FIG. 6 shows four graphs of an extended run of the fuel cell system of FIG. 1, showing the load power of the fuel cell system of FIG. 1, the battery state of charge, the fuel cell stack power, and the cumulative voltage cycles of the fuel cell system of FIG. 1;
FIG. 7 shows four graphs demonstrating the different phases of a single voltage cycle, showing the current of the fuel cell of FIG. 1, whether the resistor of FIG. 1 is connected, whether the battery of FIG. 1 is connected, and the voltage of the fuel cell system of FIG. 1;
FIG. 8 is a graph that shows the frequency of bleed down when compared to the baseline frequency of bleed down comparing the high load versus the light load fuel cell systems of FIG. 4; and
FIG. 9 is a table that shows the frequency of voltage cycling as a function of the battery state of charge and the electric charge of the fuel cell of FIG. 1.

### Detailed Description of the Invention

The present invention will be discussed hereinafter in detail in terms of various exemplary embodiments according to the present invention with reference to the accompanying drawings. In the following detailed description, numerous specific details are set forth in order to provide a thorough understanding of the present invention. It will be obvious, however, to those skilled in the art that the present invention may be practiced without these specific details. In other instances, well-known structures are not shown in detail in order to avoid unnecessary obscuring of the present invention.

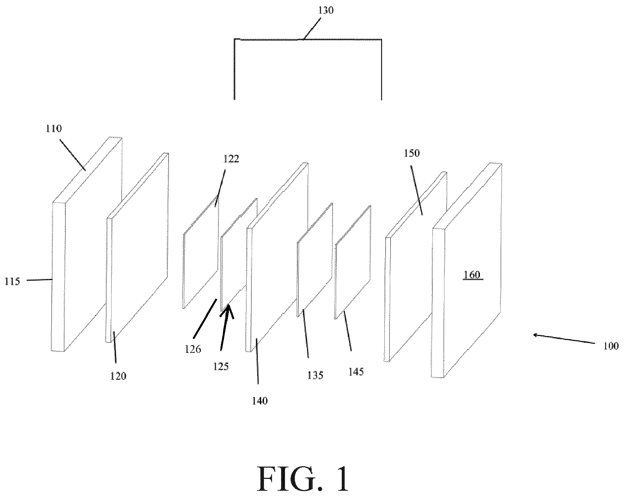

Thus, all the implementations described below are exemplary implementations provided to enable persons skilled in the art to make or use the embodiments of the disclosure and are not intended to limit the scope of the disclosure, which is defined by the claims. As used herein, the word "exemplary" or "illustrative" means "serving as an example, instance, or illustration." Any implementation described herein as "exemplary" or "illustrative" is not necessarily to be construed as preferred or advantageous over other implementations. Moreover, in the present description, the terms "upper", "lower", "left", "rear", "right", "front", "vertical", "horizontal", and derivatives thereof shall relate to the invention as oriented in FIG. 1.

Furthermore, there is no intention to be bound by any expressed or implied theory presented in the preceding technical field, background, brief summary or the following detailed description. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

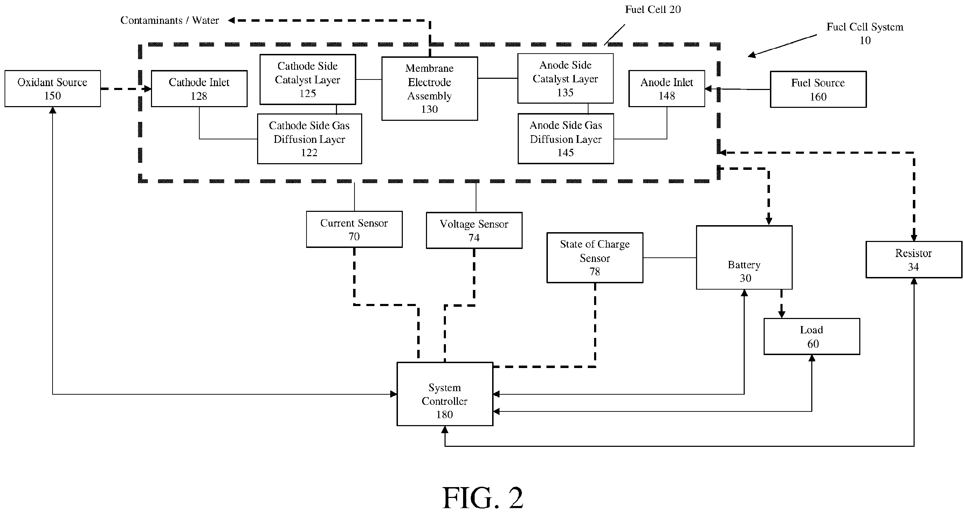

In an example, FIG. 1 depicts a schematic exploded view of an example of an internal subassembly 100 of a fuel cell stack (e.g., a fuel cell 20 of FIG. 2) including a cathodic plate separator 110 at an outer end 115 and a plate separator seal 120 on an inner side thereof. A membrane electrode assembly (MEA) 130 is located between seal 120 and a second plate separator seal 150. An anode plate separator 160 is on a second end 165 of subassembly 100.

MEA 130 includes a membrane 140 (e.g., an ion conducting membrane) between a cathode side catalyst layer 125 having a catalyst surface 126 and an anode side catalyst layer 135. A cathode side gas diffusion layer (GDL) 122 is located between cathode side catalyst layer 125 of the membrane electrode assembly 130 and plate separator 110. An anode side gas diffusion layer 145 is located between anode side catalyst layer 135 of membrane electrode assembly 130 and anode plate separator 160. Seal 120 and seal 150 may be received in a channel of on an inner side of plate separator 110 and anode plate separator 160, respectively. In another example, such seals may be injection molded around a membrane electrode assembly (e.g., membrane electrode assembly 130) or another fuel cell component.

Referring to FIG. 2, an electrical demand by a load 60, for example, an industrial electric vehicle (e.g., an electrically powered forklift truck), or any other load, such as any electric device, light bulb, radio, electric heater, a resistor 34, or fan motor, may be connected to energy storage device or a battery 30 and fuel cell stack (e.g., fuel cell 20) in parallel by an electrical connection. Depending on the demand, power may flow from energy storage device or battery 30, fuel cell 20, or both to load 60. In times of high demand in excess of the maximum power output of fuel cell 20, power may flow from both fuel cell 20 and energy storage device / battery 30 to load 60. In times of low demand, power may flow to load 60 from fuel cell 20, while excess power from fuel cell 20 may flow into energy storage device or battery 30 to recharge energy storage device or battery 30 when required. In the case of loads that can source power, such as regenerative braking, power may flow from such a load (e.g., load 60) to energy storage device or battery 30.

Resistor 34 may be a coolant heater (e.g., an electrical resistive heater) configured to heat a coolant in fluid communication with an interior of a fuel cell stack (e.g., fuel cell 20) to allow a temperature of the fuel cell stack (e.g., fuel cell 20) to be controlled. In such an example, the coolant may be heated to heat the fuel cell stack (e.g., fuel cell 20) at the time of starting of operation of the stack. A controller 180 may control an operation of resistor 34 (e.g., an electrical resistive heater), such as by controlling a connection of the resistor to the fuel cell.

As discussed above, contaminants may accumulate in fuel cells (e.g., fuel cell 20). One way of reducing contaminants may be through voltage cycling through an in-situ preventive method that minimizes recoverable voltage decay by cleaning off a catalyst surface (e.g., cathode side catalyst surface 126 of catalyst layer 125) and maximizing the fraction of open sites in a converter-less fuel cell system. For example, during an operation of a fuel cell stack (e.g., fuel cell 20) voltage may be reduced in a stack, or portion of a stack, to reduce contaminants (e.g., volatile organic contaminants) on a catalyst surface (e.g., catalyst surface 126) by expelling contaminants in wastewater from the stack via an air outlet (i.e., a cathode or oxidant outlet) or directly through the membrane electrode assembly 130. Voltage may be reduced (e.g., to below 0.3 V per cell) by reducing or stopping a flow of oxidant (e.g., air) to the cathode inlet 128 of the stack. Further, current from fuel cell 20 may be directed to resistor 34, such as a coolant heater, to reduce the voltage. Fuel cell 20 may then be reactivated by increasing the oxidant supply, and such steps of reducing and increasing oxidant supply may be performed to provide the voltage cycling.

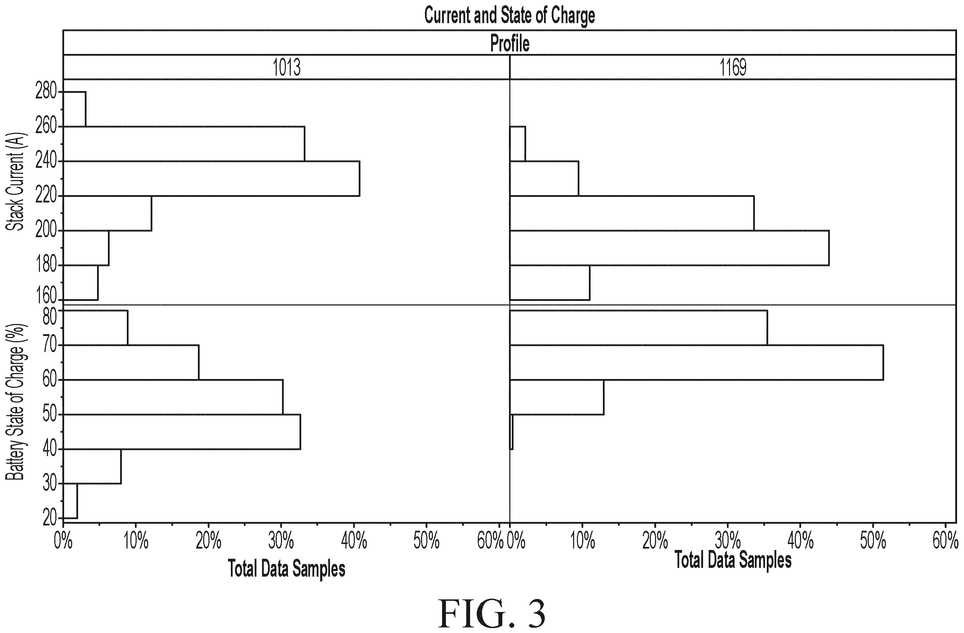

The process of reducing voltage as described may be performed at intervals during regular operation of the stack (e.g., fuel cell 20) to produce electricity such that the stack may be maintained with contaminants at an acceptable level. For example, a controller (e.g., controller 180) of a fuel cell stack (e.g., fuel cell 20) could reduce or stop flow of oxidants while directing a flow of current to resistor 34 (e.g., a coolant heater) at a rate which may depend on a battery state of charge and an energy usage over a particular duration, as depicted for example in FIG 3. A length of such a voltage cycle may range from several seconds up to a minute, for example.

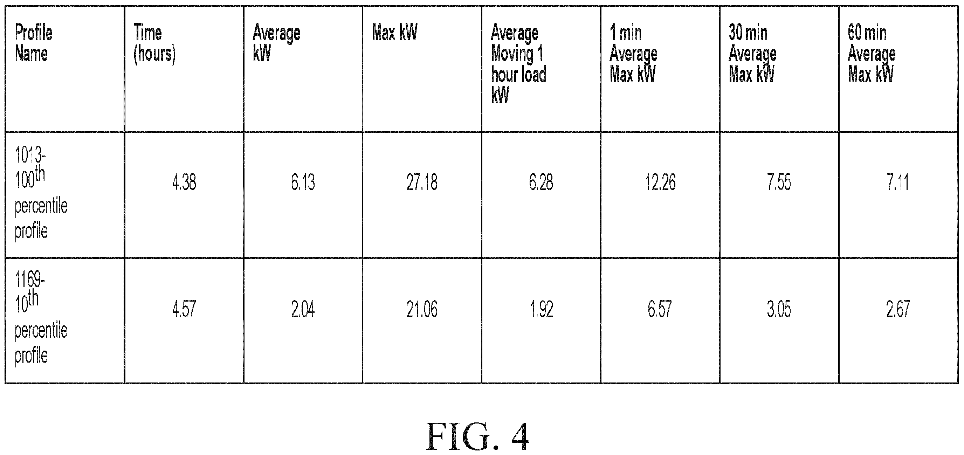

Such voltage cycling could be done based on a load profile. For example, a higher load profile (e.g., a run 1013) may lead to a lower battery state of charge, and therefore less cycles as depicted in FIG. 3. In contrast, a lower load profile (e.g., a run 1169) could lead to a high battery state of charge and therefore higher cycles rate as depicted in FIG. 3. As an example, FIG. 4 demonstrates the difference between a higher load cycle and a higher load example. One example of a higher load cycle may have an average power kW of 6.13, as depicted by run 1013 in FIGS. 3 and 4 and a lower load cycle may have an average kW of 2.04 kW, as depicted by run 1169 in FIGS. 3 and 4. Returning to FIG. 3, the cycling of voltage as described may be more desirable during lower load profiles when a fuel cell stack (e.g., fuel cell 20) may be sitting idle for longer periods of time because the increased idling allows for more contaminants to build up on cathode side catalyst surface 126 of catalyst layer 125.

Controller 180 may be coupled to fans, valves, switches and other balance of plant devices to control a flow of fuel and oxidant (e.g., to anode inlet 148 and cathode inlet 128 of fuel cell 20) as described along with controlling an electrical connection with load 60 and/or other such loads.

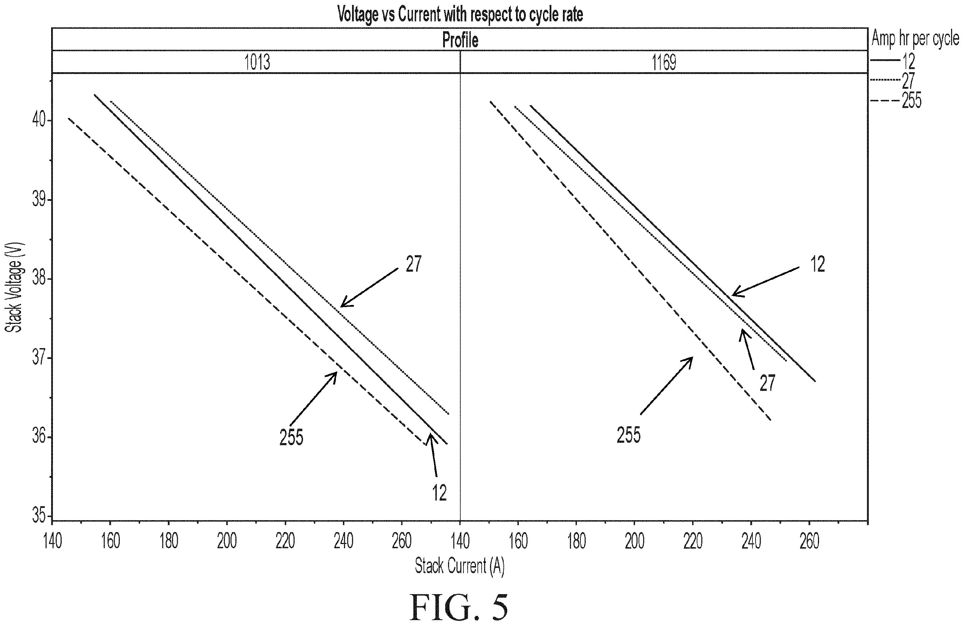

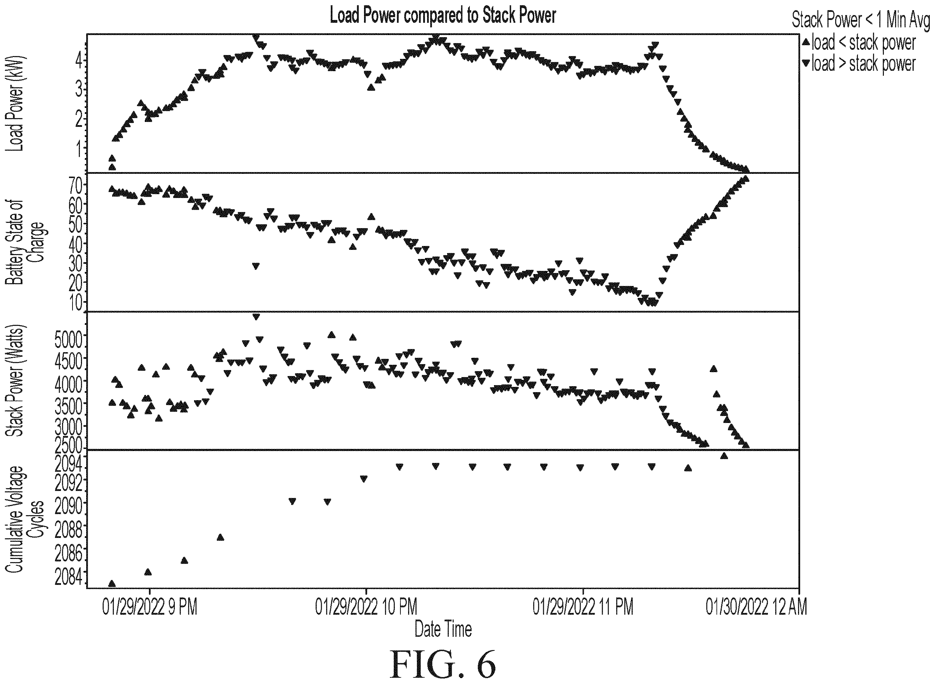

The benefits of voltage cycling as described above are more critical in light load applications where a fuel cell is idling more, as demonstrated in FIG. 5, whose values correspond to the numbers described in FIG. 4. As demonstrated in FIG. 5, the high load application is depicted on the right, while the light load application is depicted on the left. Trendline 12 refers to the relatively highest frequency of cycles, trendline 27 refers to a relatively moderate frequency of cycles, and trendline 255 refers to the relatively lowest frequency of voltage cycles. As can be seen in the higher load application as indicated by the current and voltage, when the frequency of voltage cycles increases, the fuel cell tends to increase its performance. With lighter load applications, when the frequency of voltage cycles increases, the fuel cell first increases its performance when there is the least amount of cycles to the moderate amount of cycles, but then performance dips below the moderate amount of cycles with the highest amount of cycles. Thus, it would follow that light load applications have more system downtime where a fuel cell catalyst surface (e.g., cathode side catalyst surface 126) can be more contaminated by coolant and MEA ionomer, both of which have been shown to degrade fuel cell performance. In addition, idling of a fuel cell (e.g., fuel cell 20) can cause oxides to form on the catalyst surface (e.g., cathode side catalyst surface 126). For example, FIG. 6 demonstrates a fuel cell's (e.g., fuel cell 20) performance when voltage cycles do not occur. FIG. 6 depicts a scenario where a fuel cell (e.g., fuel cell 20) ceases performing voltage cycles at approximately 10 PM on January 29, 2022. After that time, the battery state of charge gradually decreases until approximately 11:45 PM on January 29, 2022 where a voltage cycle occurs and the battery state of charge increases. Thus, FIG. 6 demonstrates how not utilizing voltage cycles can degrade fuel cell performance, but the utilization of a voltage cycle can increase fuel cell performance. Returning to FIG. 5, the difference between light load and heavy load applications is counter intuitive to common understanding of fuel cell operation as more air contaminants are picked up in high load application where the fuel cell is used more frequently. It would be beneficial to utilize frequent "breaks" in producing fuel cell power where a voltage cycle can occur. Extended runs without a voltage cycle to clean the catalyst can lead to significant voltage decay. Voltage cycling cleans off the catalyst surface and allows desorption into the available fuel cell water, which is produced concurrently allowing the contaminants to be removed.

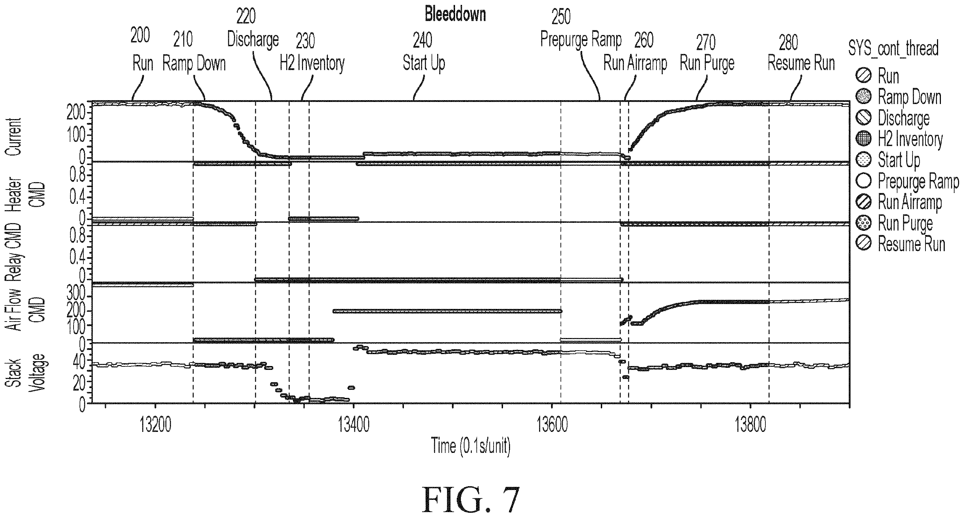

In accordance with the principles of the present invention, fuel cell systems and methods for operating fuel cell systems to reduce contamination of particulate buildup in fuel cells that degrade fuel cell performance are provided. In an example depicted in FIG. 7, a fuel cell system 10 (FIG. 2) may use periodic oxygen starvation and voltage bleed down / reduction of the fuel cell system 10 (FIG. 2) to expel contaminants through wastewater produced by the fuel cell system 10 (FIG. 2) through a membrane electrode assembly. A voltage bleed down refers to a process where the voltage of fuel cell 20 (FIG. 2) is lowered and fuel cell 20 (FIG. 2) is accompanied by a lowering and/or cessation of air flow to fuel cell 20 (FIG. 2) to deprive fuel cell 20 (FIG. 2) of oxidants. This voltage bleed down may cause built-up contaminants in fuel cell 20 (FIG. 2) to be expelled, such as through wastewater produced as a byproduct of fuel cell operation. Voltage bleed down may also refer to a cycle of voltage alteration which includes the first above described lowering of the voltage of fuel cell 20 (FIG. 2) and an accompanying expulsion of contaminants from fuel cell 20 (FIG. 2), and then an increase in the voltage of fuel cell 20 (FIG. 2), another lowering of the voltage of fuel cell 20 (FIG. 2) which may be shorter in duration than the first lowering of the voltage of fuel cell 20 (FIG. 2), another possible expulsion of contaminants from fuel cell 20 (FIG. 2), and an increase of the voltage of fuel cell 20 (FIG. 2) resulting in the normal current running through fuel cell 20 (FIG. 2), returning fuel cell system 10 to a standard power producing phase of fuel cell 20 (FIG. 2).

As depicted in FIG. 2, a fuel cell system 10 is referred to as the assembled, or complete, system which functionally together with all parts thereof produces electricity and typically includes fuel cell 20 and battery 30 connected to fuel cell 20. FIG. 2 uses solid lines to indicate a coupling or a connection, one-way directional arrows to indicate either a one-way flow or a one-way transmission of information from one source to another, two-way directional arrows to indicate either a flowing and/or a transmission of information between two parts, a dashed box to indicate that several parts are part of a subsystem (e.g., fuel cell 20), and dashed lines to indicate a coupling between a sensor and a system controller 180 where a sensor intermittently or continuously transmits information to system controller 180. As depicted, fuel cell 20 may comprise membrane electrode assembly 130 with membrane layer 140, cathode side catalyst surface 125 coupled to a side of membrane layer 140, anode side catalyst surface 135 coupled to an opposite side of membrane layer 140 opposing cathode side catalyst surface 125. A cathode inlet 128 may be connected to a side of cathode side catalyst surface 125 that functions to receive a flow of oxidants via an external oxidant source 150 and an anode inlet 148 may be connected to an anode side catalyst surface 135 abutting membrane electrode assembly 140 that functions to receive a flow of fuel via an external fuel source 160.

Excess water and contaminants from an oxygen deprivation may be exhausted directly from membrane electrode assembly 140 and out into a surrounding environment (not illustrated). Fuel cell 20 may supply energy to battery 30 that is releasably connected to fuel cell 20 through an electrical current that connects fuel cell 20 to battery 30. Battery 30 may be connected to and supply power to load 60. Fuel cell 20 may be releasably connected to resistor 34, such as a resistive coolant heater. Resistor 34 may receive power from fuel cell 20 at a lower load than battery 30, allowing the voltage of fuel cell 20 to lower to a predetermined voltage. Another resistor, coolant heater, or other heating device may also be configured to control a temperature of fuel cell 20 and/or coolant flowing through fuel cell 20, and/or prevent and/or limit voltage fluctuation and ensure a relatively steady lowering of voltage during voltage bleed down.

Multiple sensors may be connected to different parts of the fuel cell system 10 and to system controller 180 as depicted in FIG. 2. For example, a state of charge sensor 78 that measures a state of charge of battery 20 may be connected to battery 20 and system controller 180. System controller 180 may receive a measurement of the state of charge of battery 20 and determine that a voltage bleed down may occur when battery 20 has a charge within a certain range, for example, when battery 20 has between 10 to 25% state of charge. If battery 20 has below 10% state of charge, system controller 180 may determine that a voltage bleed down is not viable and fuel cell 20 should continue to operate until the state of charge of the battery 20 has increased to 10% or above. If the state of charge is above 25%, system controller 180 may determine that a voltage bleed down may or may not be necessary and not begin a voltage bleed down. Other sensors may include a voltage sensor 74 that may be connected to fuel cell 20 and system controller 180, a current sensor 70 that may be connected to fuel cell 20 and system controller 180, a sensor for measuring the air flow of oxidants from oxidant source that may be connected to oxidant source 150 and system controller 180, and any other sensors that measure parameters of fuel cell system. System controller 180 may use one or multiple sensors to sense, control, time, and determine various aspects of the voltage bleed down and the frequency that the voltage bleed down occurs. For example, system controller 180 may control the flow of oxidants from oxidant source 150 into fuel cell 20 via blower, conduit(s) and valve(s), and system controller 180 may connect and/or disconnect the flow of electricity from fuel cell 20 to battery 30 and/or resistor 34 via controlled switches.

As depicted in FIG. 7 using the fuel cell system depicted in FIG. 2, in a first state of the system depicted by a Run state 200 of fuel cell system 10 before voltage bleed down occurs in a Discharge state 220, system controller 180 (FIG. 2) may have an oxidant source 150 supplying oxidants to cathode inlet 128 of fuel cell 20 at an air flow rate suitable for power production from fuel cell 20 to battery 30 to load 60. In Run state 200, system controller 180 may have battery 30 connected to fuel cell 20 such that fuel cell 20 is supplying power to battery 30 and battery 30 is supplying power to load 60. Further, in Run state 200, system controller 180 may have resistor 34 disconnected from fuel cell 20 such that fuel cell 20 is not supplying an electrical current to resistor 34. Based on feedback from sensors, for example current sensor 70 that fuel cell 20 has discharged a certain ampere-hour threshold (e.g., 10-25 ampere-hours), system controller 180 may start the voltage bleed down cycle by cutting off air flow from oxidant source 150 to fuel cell 20 to prepare the fuel cell 20 for oxygen starvation and decontamination of contaminants in fuel cell 20.

In a second state of the system depicted by the Ramp Down state 210, fuel cell system 10 may be preparing for oxygen deprivation by steadily lowering the voltage of fuel cell 20 to a predetermined voltage (e.g., between 0.4 to 0.1 V). System controller 180 may facilitate the Ramp Down state 210 by connecting resistor 34 to fuel cell 20. Resistor 34, another resistor, coolant heater, or other heating device may be used to prevent voltage fluctuation or voltage spring. System controller 180 may also cut the flow of oxidants from oxidant source 150 to cathode inlet 128 (e.g., by stopping a fan or blower providing such oxidant to cathode inlet 128). Connecting resistor 34 and cutting off oxidant flow may steadily reduce the current to fuel cell 20. As the current of fuel cell 20 decreases, system controller 180 may determine based on feedback from sensors (e.g., from current sensor 170 that around a certain current threshold) to start Discharge state 220 of the system.

In a third state of the system as depicted by Discharge state 220, built up contaminants of fuel cell system 10 may be cleaned from catalyst side catalyst surface 126 and expelled through available wastewater through membrane electrode assembly 130. In Discharge state 220, system controller 180 may reach the desired predetermined voltage (e.g., between 0.4 to 0.1 V). In order to reach the predetermined voltage, system controller 180 may disconnect battery 30 from fuel cell 20, allowing the fuel cell voltage to reach the desired predetermined voltage with no oxidant flowing into fuel cell 20.

After Discharge State 220, system controller 180 may have various states such as the H2 Inventory state 230 and Start Up state 240, characterized by the system controller 180 disconnecting and later reconnecting resistor 34, and system controller 180 re-engaging air flow at a rate less than the rate during Run state 200 in order to prepare the fuel cell 20 to return to move to a Resume Run state 280.

After a period of time either predetermined or determined based on feedback from sensors, system controller 180 may determine to transition fuel cell system 10 to Resume Run state 280. To move the system to Resume Run state 280, system controller 180 may institute a Prepurge Ramp state 250 characterized by system controller 180 cutting off flow of oxidants from oxidant source 150 into fuel cell 20. Prepurge Ramp state 250 may cause the conditions for a Run Airramp state 260, which is a state of brief voltage reduction and oxygen deprivation that may also expel contaminants through available wastewater. During this state, system controller 180 may reconnect battery 30 to fuel cell 20. Thus, the voltage bleed down may characterized by two states of contaminant expulsion, Discharge state 220 where the current is being ramped down and the voltage is being lowered and Run Airramp state 260 where the voltage is briefly lowered.

Then, system controller 180 may move on a Run Purge state 270, characterized by the increasing of current and returning fuel cell 20 to conditions for power production. In this state, system controller 180 may decide to gradually increase the flow of oxidants until the system controller 180 determines, based on feedback from current sensor, that the current of fuel cell 20 has returned to its normal current operating conditions. Thus, Ramp Down 210, Discharge 220, H2 Inventory 230, Start Up 240, Prepurge Ramp 250, and Run Airramp 260 states may indicate an example of one voltage bleed down in between Run state 200 and Resume Run state 280 of fuel cell. System controller 180 may decide at a later time during Run state 200 or Resume Run state 280 to disconnect resistor 34 based on the temperature of fuel cell 20.

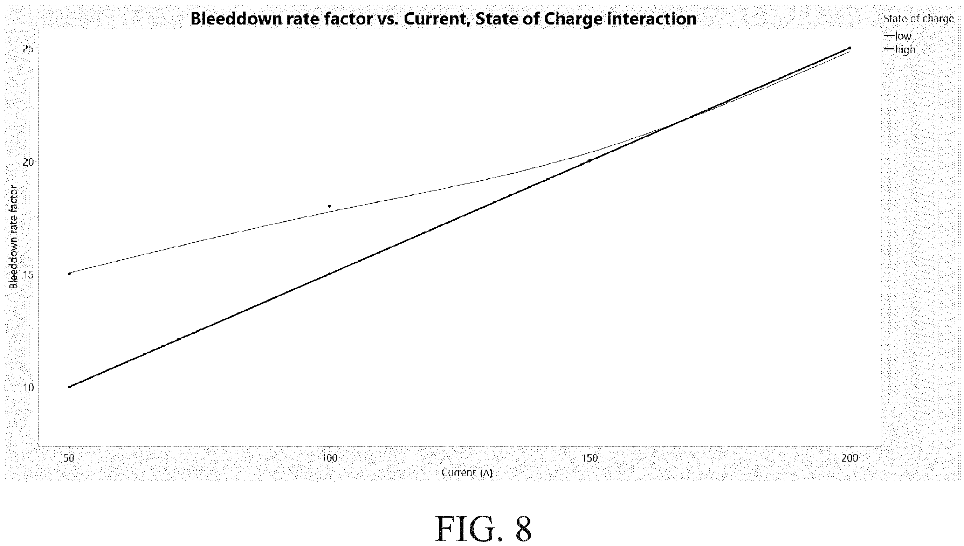

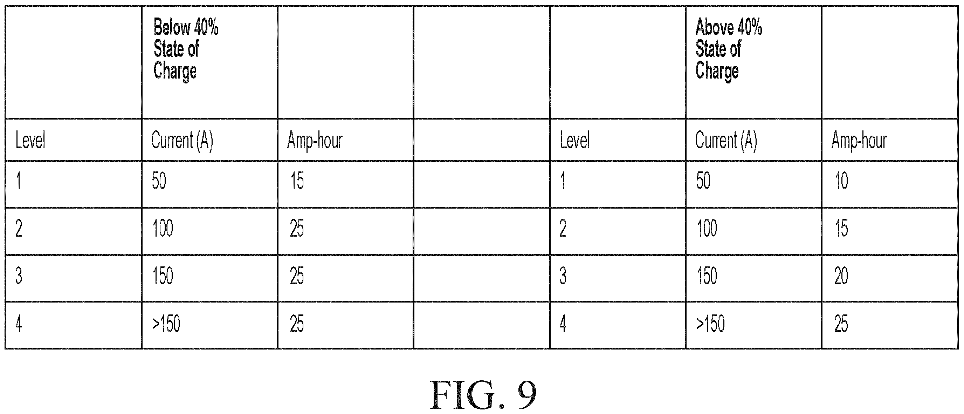

In general, repeating the previous steps and deciding when to perform periodic oxygen starvation and at what frequency to optimize system longevity may be determined (e.g., by controller 180) on a frequency determined by the load profile, battery state of charge, state of health of the system, and/or other parameters. As depicted in FIG. 8, the bleed down rate factor, which refers to the ratio of actual voltage bleed down frequency versus a baseline voltage bleed down frequency, versus current running through fuel cell may result in a higher bleed down rate factor in lighter load applications at lower currents than heavier load applications. However, as the current running through fuel cell may increase, the bleed down rate factor may be approximately similar. Or, as depicted in FIG. 9, different levels of voltage cycling may occur when the current and ampere-hour discharge of a fuel cell operate at certain values or within certain ranges.

The described release of contaminants from catalyst surface 126 (e.g., via desorbing and transport by water) may be useful for anion contamination from the ionomer of cathode side catalyst layer 125 and membrane layer 140 as membrane layer 140 degrades, for example.

Several features of the present invention have been described herein with a specific number or type of features, however, any number of features that may accomplish the process of contaminant expulsion through a fuel cell (e.g., fuel cell 20) through oxygen deprivation through voltage reduction may be used. For example, a coolant heater is described as one type of resistor (e.g., resistor 34); however, other types of resistors may also be used. In another example, FIG. 2 uses the illustration of a single battery (e.g., battery 30) and a single resistor (e.g., resistor 34); however, a fuel cell system 10 may use multiple batteries and/or multiple resistors and/or multiple other loads to facilitate a voltage bleed down. In another example, FIG. 2 depicts the use of three sensors (i.e., current sensor 70, voltage sensor 74, and state of charge sensor 78). However, a system controller (e.g., system controller 180) may also use more or less sensors of the same or different types to institute a voltage bleed down based on other parameters, such as load profile of a fuel cell (e.g., fuel cell 20), time of operation of a fuel cell (e.g., fuel cell 20), etc. In an example of a system controller (e.g., system controller 180) using less sensors, a system controller (e.g., system controller 180) may start Ramp Down state 210 of a voltage bleed down using a current sensor (e.g., current sensor 70) or another sensor and then end Ramp Down state 210 after a certain predetermined amount of time instead of using a measure of voltage to institute Discharge state 220. A transition from one state to the next (e.g., Run state 200 to Ramp Down state 210, Ramp Down state 210 to Discharge state 220, Discharge state 220 to H2 Inventory state 230, H2 Inventory state 230 to Start Up state 240, Start Up state 240 to Prepurge Ramp state 250, Prepurge Ramp state 250 to Run Airramp state 260, Run Airramp state 260 to Run Purge state 270, Run Purge state 270 to Resume Run state 280) may similarly occur after a predetermined amount of time instead of through the measurement of different parameters through sensors (e.g., current sensor 70, voltage sensor 74, state of charge sensor 78). Using a predetermined amount of time may be accomplished if, for example, repeated runs of the same fuel cell system 10 has determined that a voltage bleed down repeatedly and dependably takes the same amount of time between each stage to reliably clean off contaminants from the fuel cell (e.g., fuel cell 20) and thus, measuring the parameters to institute each state may become superfluous as system performance becomes standardized or more well understood.

While several aspects of the present invention have been described and depicted herein, alternative aspects may be effected by those skilled in the art to accomplish the same objectives. Accordingly, it is intended to cover all such alternative aspects as fall within the true spirit and scope of the invention.

It is to be understood that the above description is intended to be illustrative, and not restrictive. Numerous changes and modifications may be made herein by one of ordinary skill in the art without departing from the general spirit and scope of the disclosure as defined by the following claims and the equivalents thereof. For example, the above-described embodiments (and/or aspects thereof) may be used in combination with each other. In addition, many modifications may be made to adapt a particular situation or material to the teachings of the various embodiments without departing from their scope. While the dimensions and types of materials described herein are intended to define the parameters of the various embodiments, they are by no means limiting and are merely exemplary. Many other embodiments will be apparent to those of skill in the art upon reviewing the above description.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprise" (and any form of comprise, such as "comprises" and "comprising"), "have" (and any form of have, such as "has", and "having"), "include" (and any form of include, such as "includes" and "including"), and "contain" (and any form of contain, such as "contains" and "containing") are open-ended linking verbs. As a result, a method or device that "comprises," "has," "includes," or "contains" one or more steps or elements possesses those one or more steps or elements, but is not limited to possessing only those one or more steps or elements. Likewise, a step of a method or an element of a device that "comprises," "has," "includes," or "contains" one or more features possesses those one or more features, but is not limited to possessing only those one or more features. Furthermore, a device or structure that is configured in a certain way is configured in at least that way, but may also be configured in ways that are not listed.

It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While the present disclosure has been described in detail in connection with only a limited number of embodiments, it should be readily understood that the present disclosure is not limited to such disclosed embodiments. Rather, the invention can be modified to incorporate any number of variations, alterations, substitutions or equivalent arrangements not heretofore described, but which are commensurate with the spirit and scope of the present disclosure. Additionally, while various embodiments of the present disclosure have been described, it is to be understood that aspects of the disclosure may include only some of the described embodiments.

## Claims

1. A method for reducing fuel cell contaminants of a fuel cell, comprising:
flowing oxidant to a cathode and fuel to an anode of the fuel cell to provide a first flow of electrical current to a battery;
disconnecting the fuel cell from the battery;
stopping a flow of the oxidant to a cathode inlet of the fuel cell;
passing current from the fuel cell through a resistor coupled to the fuel cell;
allowing a voltage of the fuel cell to go below a predetermined voltage to clean off a catalyst surface of a membrane of a membrane electrode assembly of the fuel cell;
increasing the flow of the oxidant to the cathode; and
reconnecting the battery to the fuel cell to provide a second flow of the electrical current to the battery.

2. The method of claim 1, further comprising operating the fuel cell for a period of time; and re-disconnecting the fuel cell from the battery.

3. The method of claim 2, further comprising determining the period of time based on a state of charge of the battery, wherein the state of charge is between 10 to 25%.

4. The method of claim 2, further comprising determining the period of time based on an ampere-hour usage of the fuel cell, wherein the ampere-hour usage is between 10 and 25 ampere-hours.

5. The method of claim 1, where the predetermined voltage is 0.3 V.

6. The method of claim 1 wherein the flowing the oxidant to the cathode and the fuel to the anode of the fuel cell to provide the first flow of electrical current to the battery comprises flowing an amount of the oxidant through the fuel cell to generate less than 1 kW in electrical power.

7. The method of claim 1, wherein the stopping the flow of the oxidant to the cathode inlet of the fuel cell occurs when the fuel cell discharges 10 to 25 ampere-hours of electric charge.

8. A fuel cell system, comprising:
a fuel cell having a membrane electrode assembly with a membrane having a catalyst surface;
an oxidant source supplying a flow of oxidants to the fuel cell;
a controller configured to stop the flow of oxidants to the fuel cell;
a battery electrically connected to the fuel cell;
the controller configured to disconnect the battery from the fuel cell; and
the controller configured to connect a resistor to the fuel cell such that current passes from the fuel cell through the resistor to allow a voltage of the fuel cell to go below a predetermined voltage to clean off the catalyst surface of the membrane of the membrane electrode assembly of the fuel cell.

9. The fuel cell system of claim 8, wherein the controller is configured to stop the flow of oxidants to the fuel cell based on an ampere-hour usage of the fuel cell, wherein the ampere-hour usage is between 10 and 25 ampere-hours.

10. The fuel cell system of claim 8, wherein the controller is configured to disconnect the resistor from the fuel cell when the voltage of the fuel cell reaches a predetermined voltage, wherein the predetermined voltage is 0.3V.

11. The fuel cell system of claim 8, wherein the controller is configured to connect the resistor to the fuel cell when the ampere-hour usage of the fuel cell is between 10 and 25 ampere-hours.

12. The fuel cell system of claim 8, wherein the oxidant source is supplying the flow of oxidants to the fuel cell for a period of time before disconnecting the battery from the fuel cell, such that the controller determines the period of time based on the ampere-hour usage of the fuel cell, wherein the ampere-hour usage is between 10 and 25 ampere-hours.

13. The fuel cell system of claim 8, wherein the cleaning comprises desorbing contaminants from the catalyst and expelling the contaminants in water flowing through an outlet of the fuel cell.

14. The fuel cell system of claim 8, wherein the controller is configured to control the supplying the flow of oxidants to the fuel cell for a period of time before the controller disconnects the battery from the fuel cell, wherein the controller determines the period of time based on a state of charge of the battery.

15. The fuel cell system of claim 8, wherein the resistor is a resistive coolant heater of the fuel cell configured to control a temperature of coolant flowing through the fuel cell.

16. The fuel cell system of claim 8, wherein the battery comprises a higher load than the resistor.
